# EUROPEAN PATENT APPLICATION

(11) **EP 1 821 248 A2**
(43) Date of publication of application: **22.08.2007**
(21) Application number: 07250482.2
(22) Date of filing: 06.02.2007
(51) Int. Cl.: G06Q 10/00

(54) **Channel search method and communication apparatus using the same**

(30) Priority: 15.02.2006 JP 2006038660
(71) Applicant: Mitsumi Electric Co., Ltd., Tama-shi, Tokyo 206-8567 (JP)
(72) Inventor: Sukegawa, Katsuhiko, Tama-shi Tokyo 206-8567 (JP); Kimura, Youichi, Tama-shi Tokyo 206-8567 (JP)
(74) Representative: Rees, Alexander Ellison

(57) **Abstract**

There is disclosed a communication channel search method for searching for a beacon transmitted from a base station and setting a communication channel with the base station based on a search result and the received beacon. The communication channel search method includes the steps of: transmitting a plurality of beacons from the base station for a fixed transmission time for transmitting each beacon in a predetermined cycle; and searching for the beacon for a time corresponding to the fixed transmission time for transmitting each beacon in each interval corresponding to a transmission interval for transmitting the plural beacons.

## Description

### BACKGROUND OF THE INVENTION

### 1. Field of the Invention

The present invention generally relates to a channel search method and a communication apparatus using the same and particularly to a channel search method and a communication apparatus using the same in which a beacon transmitted from a base station is searched for and a communication channel with the base station is set based on a search result and the received beacon.

### 2. Description of the Related Art

In an electronic shelf label system, an electronic shelf label having rewritable display information is registered in a host computer and then attached to a product shelf. It is possible to rewrite the display information of the electronic shelf label from the host computer by accessing the electronic shelf label through an access point (refer to Patent Documents 1 to 5).

Such an electronic shelf label system employs a communication system for determining a communication channel, in which a beacon is used for communication between the electronic shelf label and the access point. In one method referred to as passive scanning in communication systems using a beacon, when the electronic shelf label searches for a channel used in the communication system, it is impossible to discover the channel if scanning fails to continue for a beacon cycle of Tbcn_cycle millisecond.

On the other hand, electronic shelf labels are driven by a battery, so that low power consumption is desired. In general, in proportion as the beacon cycle is reduced, scanning time on the electronic shelf label is reduced, so that low power consumption is realized. However, when the beacon cycle is simply reduced, occupancy in a radio channel frequency band is increased and a radio system using the same frequency band is greatly influenced.

Patent Document 1: Japanese Laid-Open Patent Application No. 2002-304673

Patent Document 2: Japanese Laid-Open Patent Application No. 2005-99888

Patent Document 3: Japanese Laid-Open Patent Application No. 2002-109177

Patent Document 4: Japanese Laid-Open Patent Application No. 2004-265196

Patent Document 5: Japanese Laid-Open Patent Application No. 9-138892

Because of this, in electronic shelf label systems in particular, a search method capable of realizing low power consumption without increasing occupancy is desired.

### SUMMARY OF THE INVENTION

It is a general object of the present invention to provide an improved and useful channel search method and communication apparatus using the same in which the above-mentioned problems are eliminated.

A more specific object of the present invention is to provide a channel search method and communication apparatus using the same that can realize low power consumption.

According to one aspect of the present invention, there is provided a communication channel search method for searching for a beacon transmitted from a base station and setting a communication channel with the base station based on a search result and the received beacon, the communication channel search method comprising the steps of: transmitting a plurality of beacons from the base station for a fixed transmission time for transmitting each beacon in a predetermined cycle; and searching for the beacon for a time corresponding to the fixed transmission time for transmitting each beacon in each interval corresponding to a transmission interval for transmitting the plural beacons.

According to another aspect of the present invention, the communication channel search method includes the steps of: having a circuit in an operating status during a period for searching for the beacon; and maintaining only a minimum necessary portion of the circuit in operation and shifting other portions of the circuit to a sleep status as a non-operating status during other periods.

According to another aspect of the present invention, in the communication channel search method, a search operation for the beacon is performed when communication is not established with the base station.

According to another aspect of the present invention, there is provided a communication apparatus for receiving a plurality of beacons transmitted from a base station for a fixed transmission time for transmitting each beacon in each predetermined cycle and determining a communication channel with the base station, the communication apparatus comprising: a communication channel search unit searching for the beacon for a time corresponding to the fixed transmission time for transmitting each beacon in each interval corresponding to a transmission interval for transmitting the plural beacons; and a communication unit determining a communication channel in accordance with the beacon when the beacon is searched for by the communication channel search unit.

According to another aspect of the present invention, the communication apparatus includes a control unit shifting the communication unit in an operating status to a sleep status while searching using the communication channel search unit.

According to the present invention, plural beacons are transmitted from a base station for a fixed transmission time for transmitting each beacon in each predetermined cycle and a beacon is searched for for the transmission time in each interval corresponding to an interval for transmitting the plural beacons, so that low power consumption is realized without increasing occupancy.

Other objects, features and advantage of the present invention will become more apparent from the following detailed description when read in conjunction with the accompanying drawings.

### BRIEF DESCRIPTION OF THE DRAWINGS

FIG. 1 is a configuration diagram of an example of a system according to the present invention;
FIG. 2 is a block diagram of a relay device;
FIG. 3 is a block diagram of an electronic shelf label;
FIG. 4 is a process flow chart of a relay device;
FIG. 5 is a diagram illustrating a transmission pattern of a beacon transmitted from a relay device;
FIG. 6 is a process flow chart of a channel search operation by an electronic shelf label; and
FIG. 7 is a process flow chart of a variation of a channel search operation by an electronic shelf label.

### DETAILED DESCRIPTION OF THE PREFERRED EMBODIMENTS

### [System configuration]

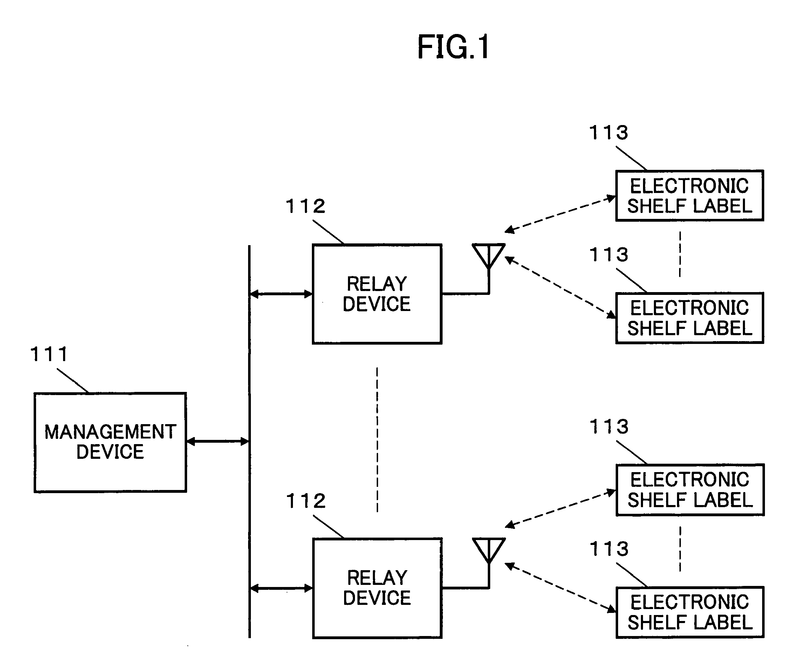

FIG. 1 is a configuration diagram of an example of a system according to the present invention.

An electronic shelf label system 100 according to the example includes a management device 111, a relay device 112, and an electronic shelf label 113. The electronic shelf label system 100 has the relay device 112 for relaying communication between the electronic shelf label 113 and the management device 111 managing the electronic shelf label 113 and manages the electronic shelf label 113 attached to a product shelf.

### [Relay device]

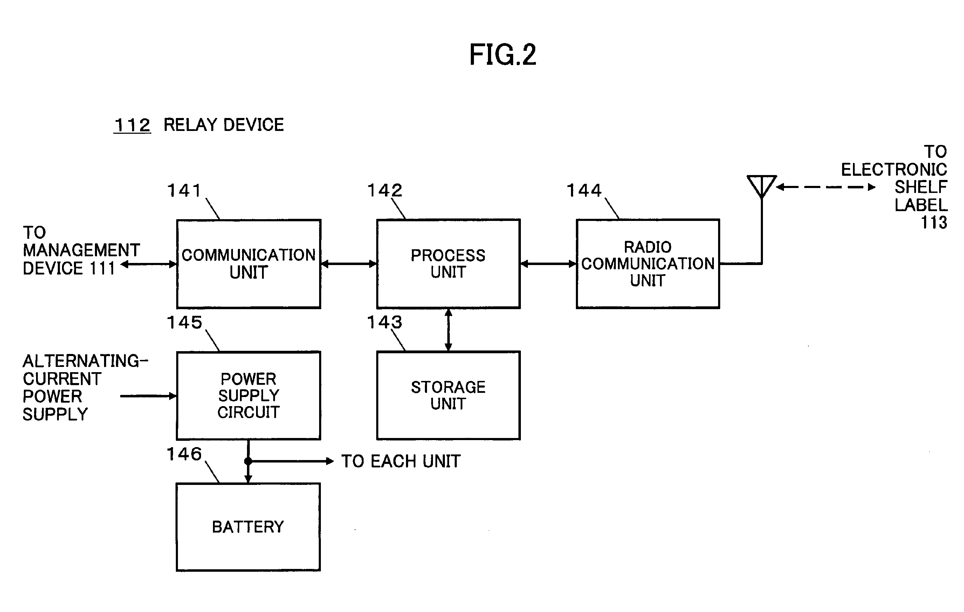

FIG. 2 is a block diagram of the relay device 112.

The relay device 112 includes a communication unit 141, a process unit 142, a storage unit 143, a radio communication unit 144, a power supply circuit 145, and a battery 146.

The communication unit 141 is connected to the management device 111 via a network such as LAN, WAN, a dedicated line, or the like. The communication unit 141 performs communication with the management device 111.

The process unit 142 includes a microcomputer and the like and performs processing for relaying communication, for example, between the management device 111 and the electronic shelf label 113 based on a program installed on the storage unit 143.

The storage unit 143 includes a rewritable non-volatile memory such as EEPROM, for example, ROM, RAM, and the like. In the storage unit 143, information 131 on electronic shelf labels within a communication range is stored in addition to a communication control program.

The radio communication unit 144 performs radio communication with the electronic shelf label 113.

The power supply circuit 145 is connected to an alternating-current power supply such as an external commercial power supply. The power supply circuit 145 converts the connected alternating-current power into a direct-current voltage and supplies the direct-current voltage as a driving voltage to the communication unit 141, the process unit 142, the storage unit 143, and the radio communication unit 144.

The battery 146 includes a Ni-Cd battery, a lithium ion battery, an electric double layer capacitor, or the like as a chargeable battery unit. The battery 146 is charged from the direct-current voltage generated in the power supply circuit 145 and supplies electric power for driving the communication unit 141, the process unit 142, the storage unit 143, and the radio communication unit 144 for a certain period of time so as to execute an end program when alternating-current power is cut.

### [Electronic shelf label]

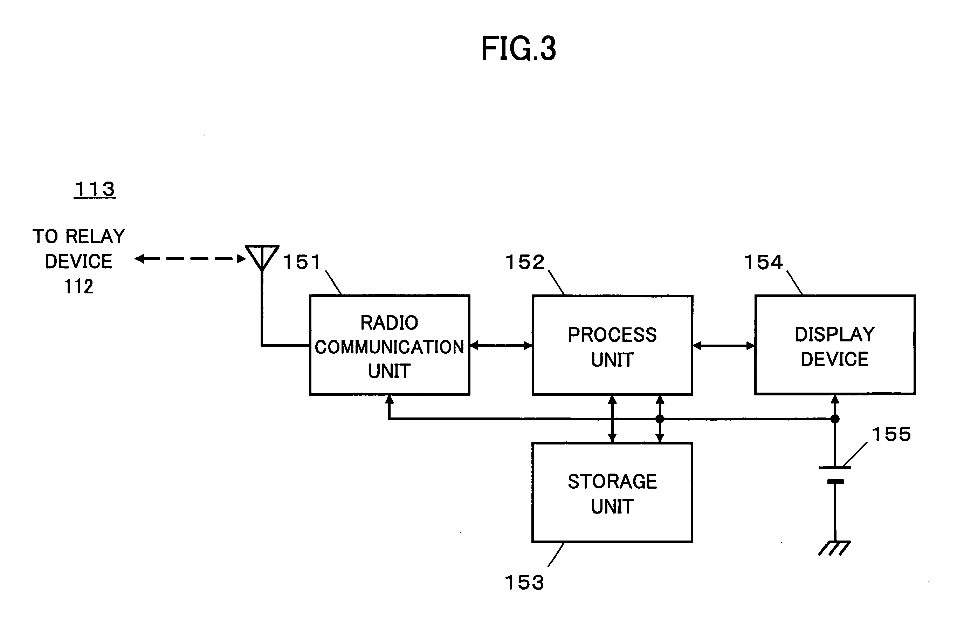

FIG. 3 is a block diagram of the electronic shelf label 113.

The electronic shelf label 113 includes a radio communication unit 151, a process unit 152, a storage unit 153, a display device 154, and a battery 155.

The radio communication unit 151 performs radio communication with the relay device 112.

The process unit 152 includes CPU, for example. The process unit 152 controls communication with the relay device 112 and also controls display of the display device 154 based on a program stored in the storage unit 153.

The storage unit 153 includes a rewritable non-volatile storage device such as EEPROM, for example. In the storage unit 153, a program executed in the process unit 152 is installed and shelf label IDs and product codes are stored. Some of the shelf label IDs and product codes are registered in advance and can be changed by the relay device 112.

The display device 154 includes LCD, an EL panel, electronic paper, or the like. The display device 154 displays product names, product codes, prices and the like.

The battery 155 includes a small battery and supplies electric power for driving the radio communication unit 151, the process unit 152, the storage unit 153, and the display device 154.

### [Communication data]

In the following, communication data exchanged between the relay device 112 and the electronic shelf label 113 is described.

The relay device 112 transfers a message referred to as a beacon to the electronic shelf label 113 in every two seconds in order to notify a status regarding communication. An interval of beacons is referred to as a frame. The frame is used as a base unit of communication between the relay device 112 and the electronic shelf label 113. The beacon includes call information of the electronic shelf label 113 communicating within the frame following the beacon such as an identification number of the electronic shelf label 113.

Each frame is divided into sixteen intervals. Each interval (125 millisecond) of the divided sixteen portions is referred to as a data slot.

A top of the frame has a period for transferring the message referred to as a beacon. Thus, a top of a first data slot within a frame is used as an interval for transferring the beacon.

Second to fifteenth data slots within a frame have the same structure. However, data to be transferred is different. At tops of these data slots, a message referred to as a null beacon having a function differing from that of the beacon is transferred.

The relay device 112 transfers a beacon in every two seconds and transfers a null beacon in every 125 millisecond thereafter. The transfer of null beacon is performed in every 125 millisecond is repeated until the next beacon is transferred.

Within one frame, there are one interval for transferring a beacon and fifteen intervals for transferring a null beacon. Functions of the beacon and bull beacon are different.

The normal beacon has a function of calling the electronic shelf label 113 and call information includes an identification number of the electronic shelf label 113.

On the other hand, the null beacon is used when the electronic shelf label 113 performs channel search for discovering the relay device 112. The electronic shelf label 113 uses the null beacon solely for the channel search.

The null beacon includes a time offset value for the beacon transfer interval. In accordance with this information, when one null beacon is obtained, it is possible to obtain timing of the beacon transfer interval.

### [Operation]

Next, a channel search operation of the present example is described.

First, transmission processing of the relay device 112 is described.

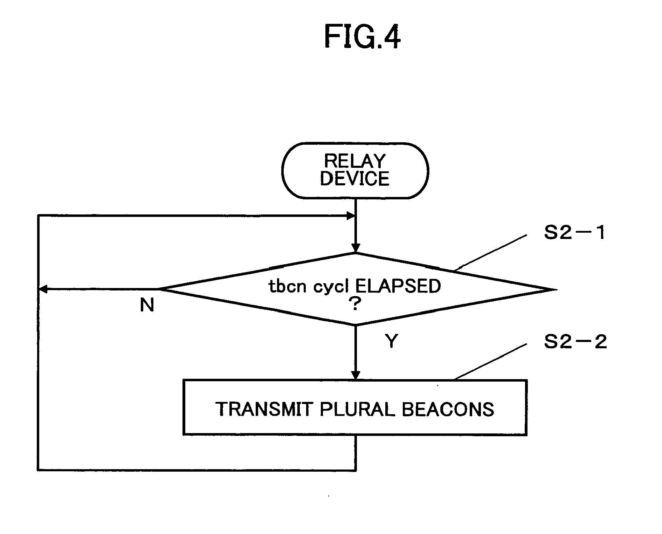

FIG. 4 is a process flow chart of a relay device.

In the relay device 112, when a beacon transmission cycle of Tbcn_cycle millisecond has elapsed in step S2-1, the relay device 112 transmits plural beacons in step S2-2.

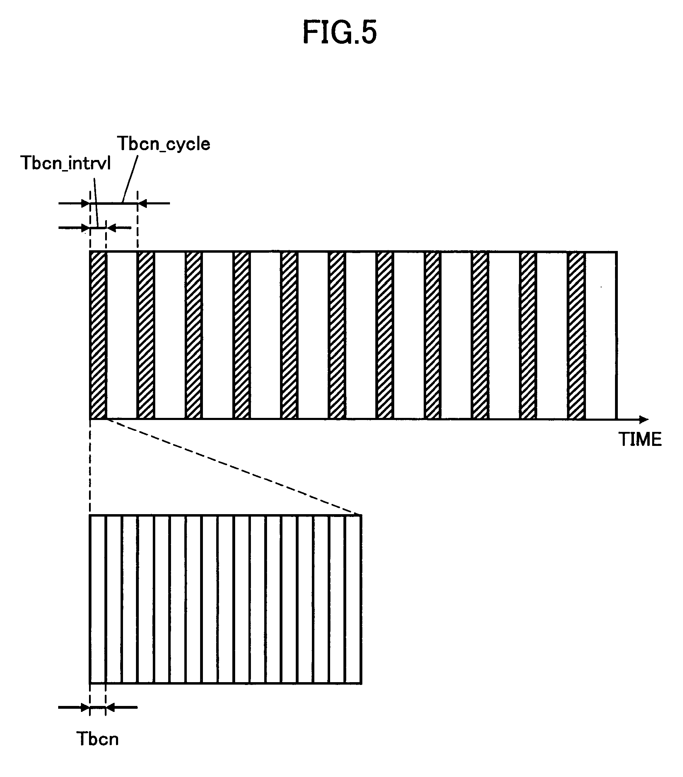

FIG. 5 is a diagram illustrating a transmission pattern of a beacon transmitted from the relay device 112.

The relay device 112 transmits a beacon group B made of plural beacons b in every beacon transmission cycle of Tbcn_cycle millisecond. A transmission interval of the beacon group B is Tbcn_intrvl millisecond. In this case, transmission interval Tbcn_intrvl < transmission cycle Tbcn_cycle.

Further, regarding the transmission interval Tbcn_intrvl, when the number of beacons b included in the beacon group B is N and transmission time of each beacon b is Tbcn millisecond, Tbcn_intrvl = N × Tbcn.

In addition, the transmission time Tbcn millisecond of each beacon b is set to be a time such that the electronic shelf label 113 is capable of reception.

Next, the channel search operation by the electronic shelf label 113 is described.

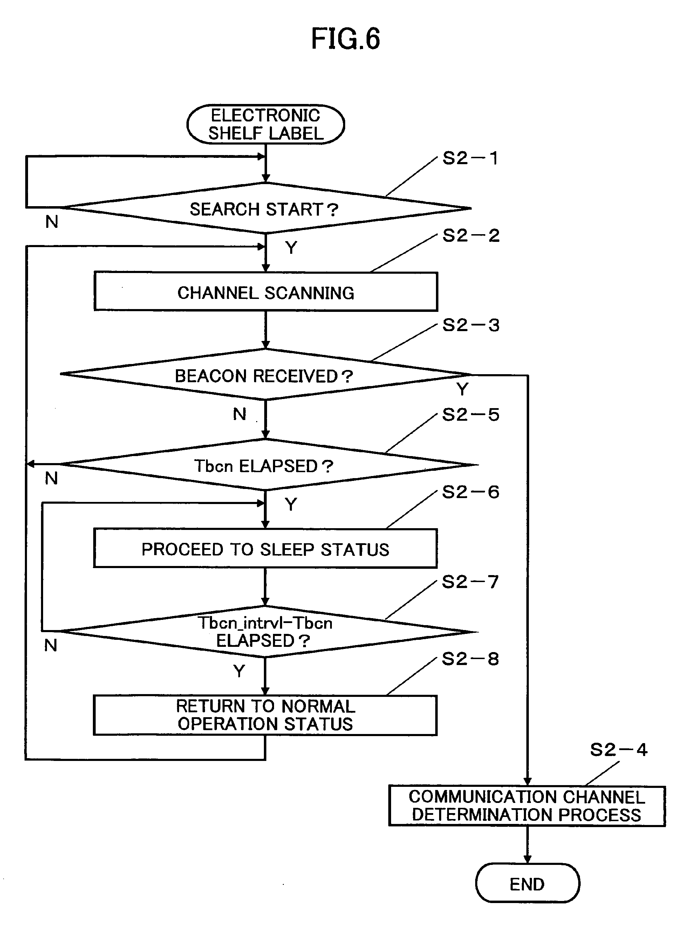

FIG. 6 is a process flow chart of the channel search operation by the electronic shelf label 113.

When the electronic shelf label 113 is incapable of synchronizing with any of the relay devices 112 in step S2-1, the electronic shelf label 113 starts channel scanning in step S2-2.

When the electronic shelf label 113 receives a beacon b in step S2-3 as a result of the channel scanning, the electronic shelf label 113 performs a communication channel determination process so as to determine a communication channel in step S2-4. In accordance with this, the electronic shelf label 113 is capable of synchronizing with the relay device 112 and communicating with the relay device 112.

When the electronic shelf label 113 is incapable of receiving a beacon b in step S2-3, the electronic shelf label 113 determines whether the transmission time Tbcn millisecond of each beacon b has elapsed in step S2-5. When the transmission time Tbcn millisecond of each beacon b has elapsed in step S2-5, the electronic shelf label 113 shifts an inner circuit thereof to a sleep status. In the sleep status, only a minimum portion of the circuit necessary for returning to a normal operation capable of communication with the relay device 112 is in an operating status and operations of other portions of the circuit are in a stopped status, for example.

When Tbcn_intrvl - Tbcn millisecond has elapsed in step S2-7, the electronic shelf label 113 returns the inner circuit in the sleep status to the normal operation capable of receiving a beacon b in step S2-8 and the process returns to step S2-2, where the electronic shelf label 113 performs channel scanning again.

In this manner, the electronic shelf label 113 scans a radio channel for substantially the beacon transmission time Tbcn millisecond. When the electronic shelf label 113 is incapable of receiving a beacon, namely, incapable of discovering an available channel, the electronic shelf label 113 shifts to the sleep status for Tbcn_intrvl - Tbcn millisecond.

By repeating the above-mentioned operation for a maximum of [(Tbcn_cycle/Tbcn_intrvl) + 1] times, it is possible to discover an available channel.

Although a maximum search interval is about Tbcn_cycle, the electronic shelf label 113 performs scanning for a maximum of [(Tbcn_cycle/Tbcn_intrvl) + 1] millisecond in practice.

For example, when a beacon or a null beacon is transferred for an interval of at least 15 millisecond in every 125 millisecond, it is sufficient to search at each point obtained by dividing the 125 millisecond into nine (≥ 125/15 = 8.3333) portions for one millisecond. This is due to the fact that each point exists at 13.8 millisecond intervals and a beacon transfer interval a width exceeding the interval must include one of the points.

In a search stage, when a sub-beacon or a null beacon is obtained in the beacon transfer interval or the null beacon transfer interval, synchronization is possible. Information sufficient for synchronization is obtained from a single sub-beacon or a single null beacon. A length thereof is not more than 504 microsecond, so that reception is sufficiently possible with one millisecond.

When it is assumed that probability of appearance of UID, which is a unique ID of each electronic shelf label 113 included in a beacon issued from the relay device 112, in each bit is obtained with equal probability, and a sub beacon number (position of sub beacon) that the shelf label stats obtaining is determined at random, an average number of sub beacons received by the electronic shelf label 113 is one.

Thus, in comparison with a case without division, time when a radio communication block is on, namely, time for checking radio waves is reduced to 1/6.

In comparison with a conventional method, scanning time is reduced to ([(Tbcn_cycle/Tbcn_intrvl)+1]*Tbcn)/Tbcn_cycle time.

For example, when Tbcn_cycle - 125 millisecond, Tbcn_intrvl = 15 millisecond, Tbcn = 1 millisecond, a maximum search time is about 125 millisecond, a maximum scanning time is 9 millisecond, so that it is possible to reduce to 9/125 time in comparison with a conventional method.

Since it is possible to reduce the search time and scanning time, it is possible to reduce power consumption of the electronic shelf label 113.

In the above example, although a single channel and the search operation are described, plural channels may be searched for.

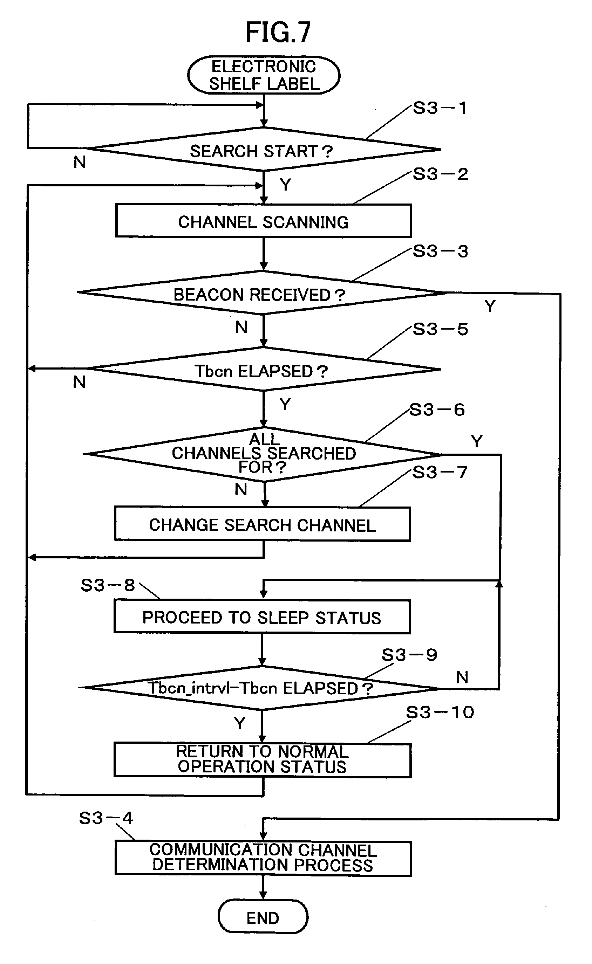

FIG. 7 is a process flow chart of a variation of a channel search operation by the electronic shelf label 113.

When the electronic shelf label 113 is incapable of synchronizing with any of the relay devices 112 in step S3-1, the electronic shelf label 113 starts channel scanning in step S3-2.

When the electronic shelf label 113 receives a beacon b in step S3-3 as a result of the channel scanning, the electronic shelf label 113 performs a communication channel determination process so as to determine a communication channel in step S3-4. In accordance with this, the electronic shelf label 113 is capable of synchronizing with the relay device 112 and communicating with the relay device 112.

When the electronic shelf label 113 is incapable of receiving a beacon b in step S3-3, the electronic shelf label 113 determines whether the transmission time Tbcn millisecond of each beacon b has elapsed in step S3-5. When the transmission time Tbcn millisecond of each beacon b has elapsed in step S3-5, the electronic shelf label 113 determines whether all channels are searched for in step S3-6.

When all channels are not searched for in step S3-6, the electronic shelf label 113 changes a search channel in step S3-7 and the process returns to step S3-2, where the electronic shelf label 113 performs channel search. When all channels are searched for in step S3-6, the electronic shelf label 113 shifts an inner circuit thereof to a sleep status in step S3-8.

When Tbcn_intrvl - Tbcn millisecond has elapsed in step S3-9, the electronic shelf label 113 returns the inner circuit in the sleep status to the normal operation capable of receiving a beacon b in step S3-10 and the process returns to step S2-2, where the electronic shelf label 113 performs channel scanning again.

In accordance with this, it is possible to perform channel search with minimum electric power and to improve a battery life in a terminal operating by a battery.

The present invention is not limited to the specifically disclosed embodiment, and variations and modifications may be made without departing from the scope of the present invention.

## Claims

1. A communication channel search method for searching for a beacon transmitted from a base station and setting a communication channel with the base station based on a search result and the received beacon, the communication channel search method being **characterized by** the steps of:
transmitting a plurality of beacons from the base station for a fixed transmission time for transmitting each beacon in a predetermined cycle; and
searching for the beacon for a time corresponding to the fixed transmission time for transmitting each beacon in each interval corresponding to a transmission interval for transmitting the plural beacons.

2. The communication channel search method according to claim 1, including the steps of:
having a circuit in an operating status during a period for searching for the beacon; and
maintaining only a minimum necessary portion of the circuit in operation and shifting other portions of the circuit to a sleep status as a non-operating status during other periods.

3. The communication channel search method according to claim 1, wherein
a search operation for the beacon is performed when communication is not established with the base station.

4. A communication apparatus for receiving a plurality of beacons transmitted from a base station for a fixed transmission time for transmitting each beacon in each predetermined cycle and determining a communication channel with the base station, the communication apparatus being **characterized by**:
a communication channel search unit searching for the beacon for a time corresponding to the fixed transmission time for transmitting each beacon in each interval corresponding to a transmission interval for transmitting the plural beacons; and
a communication unit determining a communication channel in accordance with the beacon when the beacon is searched for by the communication channel search unit.

5. The communication apparatus according to claim 4, including
a control unit shifting the communication unit in an operating status to a sleep status while searching using the communication channel search unit.
